# EUROPEAN PATENT SPECIFICATION

(11) **EP 3 819 246 B1**
(45) Date of publication and mention of the grant of the patent: **14.08.2024**
(21) Application number: 19207861.6
(22) Date of filing: 08.11.2019
(51) Int. Cl.: B66B 7/00

(54) **WIRELESS POWER TRANSFER ARRANGEMENT, ELEVATOR, AND METHOD FOR TRANSFERRING POWER WIRELESSLY IN AN ELEVATOR**
ANORDNUNG ZUR DRAHTLOSEN STROMÜBERTRAGUNG, AUFZUG UND VERFAHREN ZUR DRAHTLOSEN ÜBERTRAGUNG VON STROM IN EINEM AUFZUG
AGENCEMENT DE TRANSFERT DE PUISSANCE SANS FIL, ASCENSEUR ET PROCÉDÉ DE TRANSFERT D'ÉNERGIE SANS FIL DANS UN ASCENSEUR

(43) Date of publication of application: 12.05.2021
(73) Proprietor: KONE Corporation, 00330 Helsinki (FI)
(72) Inventor: RAASSINA, Pasi, 00330 HELSINKI (FI); RINNESAARI, Pasi, 00330 HELSINKI (FI); LAHTINEN, Ari-Pekka, 00330 HELSINKI (FI)
(74) Representative: Berggren Oy

(56) References cited:
- GB-A- 789 218
- JP-A- 2013 049 511
- JP-B2- 5 777 426
- US-A- 3 822 766

## Description

### FIELD OF THE INVENTION

The present invention relates in general to elevators. In particular, however not exclusively, the present invention concerns transferring power wirelessly in an elevator.

### BACKGROUND

There are different types of known elevators. Conventional elevators use a hoisting rope for moving an elevator car within the elevator shaft. On the other hand, in some known elevators, a linear motor is utilized to move the elevator car. Especially in elevators including an electric linear motor for moving the elevator car, wireless electrical energy transfer is strongly preferred in order to get needed energy without complex mechanics and contact points which are prone to wear. In the known solutions, however, the alignment of the elements of the wireless power transfer in order to transfer power wirelessly is a challenge.

Document JP 5777426 B presents an elevator that is designed to maintain a remaining battery level and continue operation even when power from a non-contact power feeding device is insufficient. The elevator has a contact-type power feeding that feeds power in contact with the counterweight and a non-contact power feeding device that supplies power in a non-contact manner to the counterweight that moves up and down with a car in a hoistway. There are also power supply efficiency monitoring means for monitoring the power supply efficiency of the apparatus, the non-contact power supply apparatus, and the power supply efficiency monitoring means detects a state where the power supply efficiency of the non-contact power supply apparatus is reduced to a predetermined value or less.

Document JP 2013 049511 A also discloses relevant prior art.

### SUMMARY

An objective of the present invention is to provide a wireless power transfer arrangement, an elevator, and a method for transferring power wirelessly in an elevator. Another objective of the present invention is that the arrangement, the elevator, and the method at least alleviate challenges related to the alignment of the primary and secondary sides of the wireless power transfer arrangement.

The objectives of the invention are reached by a wireless power transfer arrangement, an elevator, and a method for transferring power wirelessly in an elevator as defined by the respective independent claims.

According to a first aspect, a wireless power transfer arrangement for an elevator according to claim 1 is provided.

In various embodiments, the alignment units may be arranged to align with respect to each other when the first and the second windings are being aligned with respect to each other.

In some embodiments, at least one of the first base and the second base may be a planar element.

In various embodiments, the first alignment unit may comprise a first alignment winding, such as including at least one coil, and the second alignment unit may comprise a second alignment winding, such as including at least one coil.

In various embodiments, the first alignment unit may comprise an infrared receiver, and the second alignment unit may comprise an infrared transmitting unit.

In various embodiments, the alignment units may be configured to determine a characteristic of an air gap therebetween. In addition, the characteristic may be a width of the air gap. Still further, at least one of the first alignment unit and the second alignment unit may comprise an air gap sensor, such as for determining a width of the air gap.

According to a second aspect, an elevator is provided. The elevator comprises the wireless power transfer arrangement according to the first aspect or any embodiment thereof. The elevator further comprises the elevator shaft, the movable unit, such as at least one elevator car, and an electric linear motor comprising at least one linear stator extending in the elevator shaft and at least one mover coupled to the movable unit and adapted to be moved along the linear stator. The at least one second unit of the wireless power transfer arrangement is coupled to the movable unit, and the at least one first unit of the wireless power transfer arrangement is coupled the elevator shaft for transferring power wirelessly between the movable unit and the elevator shaft.

According to a third aspect, a method for transferring power wirelessly in an elevator is provided. The method comprises:
- generating an excitation signal by a second alignment unit of a second unit,
- determining a characteristic of a response signal by a first alignment unit of a first unit, wherein the response signal is generated in the first unit in response to the excitation signal which is transferred wirelessly between the second unit and the first unit,
- determining if the characteristic of the response signal is in a pre-defined range indicating that a first winding of the first unit and a second winding of the second unit are aligned, wherein the first winding and the second winding are arranged in fixed manner with respect to the first alignment unit and the second alignment unit, respectively, and, if the characteristic is in the pre-defined range, and
- transferring power wirelessly between the first winding and the second winding.

In various embodiments, the excitation signal may be transferred via an inductive coupling between the first and the second alignment units.

In various embodiments, the excitation signal may be transferred via an electromagnetic coupling, such as by utilizing infrared radiation, between the first and the second alignment units.

In various embodiments, the method may comprise aligning the alignment units with respect to each other when the first and the second windings are being aligned with respect to each other.

In some embodiments, the method may comprise determining a characteristic of an air gap between the first alignment unit and the second alignment unit.

The present invention provides a wireless power transfer arrangement, an elevator, and a method for transferring power wirelessly in an elevator. The present invention provides advantages over known solutions in that there is no need to do complex signaling routines to detect and control the primary and secondary side of the arrangement for the wireless power transfer because of the feedback via the alignment units, which can be made automatic and can control the start, stop and regulating operations of wireless power transfer routine. It thus solves the automatic position detection challenge for primary and secondary side alignment. Alignment units can also detect if the airgap changes. If airgap is too big, the wireless power transfer can automatically be stopped. The present invention simplifies wireless power transfer logic and control interfaces because the arrangement can automatically decide to either transfer power or not to transfer based the operation of the alignment units.

Various other advantages will become clear to a skilled person based on the following detailed description.

The expression "a plurality of" may refer to any positive integer starting from two (2), that is, being at least two.

The terms "first", "second" and "third" are herein used to distinguish one element from other element, and not to specially prioritize or order them, if not otherwise explicitly stated.

The exemplary embodiments of the present invention presented herein are not to be interpreted to pose limitations to the applicability of the appended claims. The verb "to comprise" is used herein as an open limitation that does not exclude the existence of also unrecited features. The features recited in depending claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

Some embodiments of the invention are illustrated by way of example, and not by way of limitation, in the figures of the accompanying drawings.
Figure 1 illustrates schematically an elevator according to an embodiment of the present invention.
Figure 2 illustrates schematically a wireless power transfer arrangement according to an embodiment of the present invention.
Figure 3 illustrates schematically a wireless power transfer arrangement according to an embodiment of the present invention.
Figure 4 illustrates schematically a wireless power transfer arrangement according to an embodiment of the present invention.
Figures 5A and 5B illustrate schematically a unit for wireless power transfer according to an embodiment of the present invention.
Figure 6 shows a flow diagram of a method in accordance with an embodiment of the present invention.

### DETAILED DESCRIPTION OF SOME EMBODIMENTS

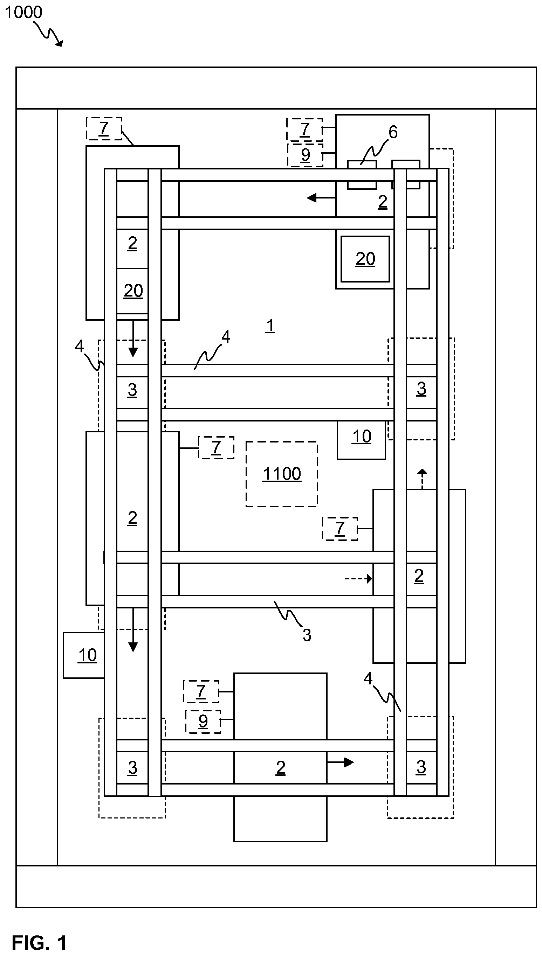

Figure 1 illustrates schematically an elevator 1000 according to an embodiment of the present invention. The elevator 1000 may comprise at least one or a plurality of movable units 2, such as elevator cars or motor units, moving in the elevator shaft 1 or the elevator car pathway 1. The movable unit(s) 2 may comprise an electrical converter unit 7, such as comprising a frequency converter or an inverter, and/or a first energy storage 9 such as a battery or batteries. The electrical converter unit 7 may be utilized for operating a mover 6 arranged to the movable unit 2, such as an elevator car or a motor unit, for moving the car 2 along the elevator shaft 1. There may also be other electrically operated equipment in the movable unit 2, such as an elevator car, such as lighting, doors, user interface, emergency rescue equipment, etc. The electrical converter unit 7 or a further electrical converter, such as an inverter or a rectifier, may be utilized for operating one or several of said other equipment of the movable unit 2, such as an elevator car or a motor unit. The first energy storage 9 may, preferably, be electrically coupled to the electrical converter unit 7, for example, to the intermediate circuit of the converter therein, for providing electrical power to the electrical converter unit 7 and/or for storing electrical energy provided by the first electrical converter unit 7 or a further electrical converter or other electrical power source.

The movable unit according to the present invention may refer, for example, to an elevator car which is arranged to be moved by a mover 6 or movers 6 of an electric linear motor of the elevator 1000 in the elevator shaft 1. However, alternatively, the movable unit(s) 2 may refer to a motor unit. The motor unit may be, in some embodiments, the mover 6 of the electric linear motor which may be moved as such in the elevator shaft 1. The motor unit may, preferably, also comprise electrical power providing means for providing electrical power to the mover 6, such as from an energy storage 9, for example, a battery or batteries. Furthermore, the motor unit may comprise a controller for controlling the movement. The elevator car, or specifically the "cage" into which the passengers enter, may then be removably coupled to the motor unit for moving the elevator car. However, in various embodiments, the motor unit may be arranged to be moved in the elevator shaft 1 and along the stator beam 4 independently of the elevator car.

There are preferably at least two landing floors, having landing floor doors 3 or openings 3, comprised in the elevator 1000. There may also be doors comprised in the movable units 2, such as the elevator cars. Although shown in Fig. 1 that there are two horizontally separated sets, or "columns", of vertically aligned landing floors, there could as well be only one column as in conventional elevators or more than two, for example, three, or basically any number of vertical and/or horizontal, or having any other direction, shaft portions.

Regarding the elevator shaft 1, it may be such that it defines a substantially closed volume in which the movable unit 2, such as an elevator car, is adapted and configured to be moved. The walls may be, for example, of concrete, metal or at least partly of glass, or any combination thereof. The elevator shaft 1 herein refers basically to any structure or pathway along which the movable unit 2, such as an elevator car, is configured to be moved.

As can be seen in Fig. 1, the movable unit 2 or units 2 may be moved along the elevator shaft 1 vertically and/or horizontally depending on the direction of stator beams 4. According to embodiments similar to one in Fig. 1 in this respect, the movable unit 2 or units 2 may be configured to be moved along at least one vertical 4 and/or horizontal 4 stator beams, for example, two beams such as in Fig. 1. The stator beams 4 are part of an electric linear motor of the elevator 1000 utilized to move the movable unit 2 or units 2 in the elevator shaft 1. The stator beams 4 may, preferably, be arranged in fixed manner, that is, stationary with respect to the elevator shaft 1, for example, to a wall of the shaft by fastening portions, which may be arranged to rotatable at direction changing positions of the movable unit 2.

The elevator 1000 may comprise an elevator control unit 1100 for controlling the operation of the elevator 1000. The elevator control unit 1100 may be a separate device or may be comprised in the other components of the elevator 1000 such as in or as a part of the electrical drive 7. The elevator control unit 1100 may also be implemented in a distributed manner so that, e.g., one portion of the elevator control unit 1100 may be comprised in the electrical drive 7 and another portion in the movable unit 2, such as in an elevator car. The elevator control unit 1100 may also be arranged in distributed manner at more than two locations or in more than two devices whereas the elevator 1000 may comprise electrical and/or data connections between the control unit 1100 and various other elements of the elevator 1000, and/or connections between different portions of the elevator control unit 1100 for enabling controlling the operation of the elevator 1000.

The elevator control unit 1100 may comprise one or more processors, one or more memories being volatile or non-volatile for storing portions of computer program code and any data values and possibly one or more user interface units. The mentioned elements may be communicatively coupled to each other with e.g. an internal bus.

The processor of the elevator control unit 1100 may be configured to implement at least various tasks of the elevator 1000, such as one or several of the method steps described hereinafter. The implementation of the tasks may be achieved by arranging the processor to execute at least some portion of computer program code stored in the memory causing the processor, and thus the elevator control unit 1100, to implement the tasks. The processor may thus be arranged to access the memory and retrieve and store any information therefrom and thereto. For sake of clarity, the processor herein refers to any unit suitable for processing information and control the operation of the elevator control unit 1100, among other tasks. The operations may also be implemented with a microcontroller solution with embedded software. Similarly, the memory is not limited to a certain type of memory only, but any memory type suitable for storing the described pieces of information may be applied in the context of the present invention.

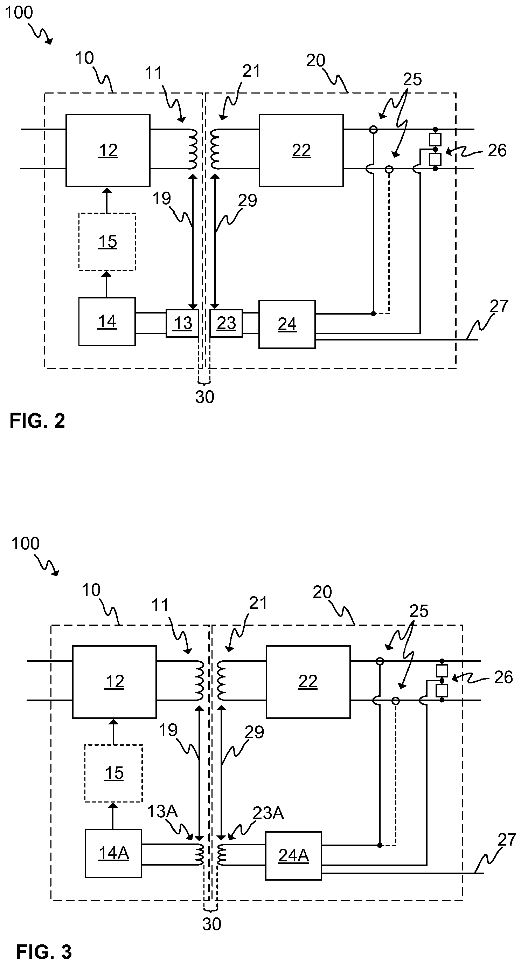

Figure 2 illustrates schematically a wireless power transfer arrangement 100 according to an embodiment of the present invention. The wireless power transfer arrangement 100 may comprise at least one first unit 10 comprising a first winding 11, such as comprising at least one coil, a first alignment unit 13 and a first base, such as a planar plate or a rigid body part, wherein the first winding 11 and the first alignment unit 13 are arranged to the first base in fixed manner with respect to each other such that there is a first distance 19 between the first winding 11 and the first alignment unit 13. Furthermore, the arrangement 100 may comprise at least one second unit 20 comprising a second winding 21, such as comprising at least one coil, a second alignment unit 23, and a second base, wherein the second winding 21 and the second alignment unit 23 are arranged to the second base in fixed manner with respect to each other such that there is a second distance 29 between the second winding 21 and the second alignment unit 23. Furthermore, one of the at least one first unit 10 and the at least one second unit 20 may be adapted for arranging to an elevator shaft 1 of the elevator 1000, and another one of the at least one first unit 10 and the at least one second unit 20 is adapted for arranging to a movable unit 2, such as to an elevator car or a motor unit, of the elevator 1000. Still further, the first alignment unit 13 and the second alignment unit 23 may be configured to be utilized for indicating when the first winding 11 and the second winding 21 are aligned with respect to each other for transferring power wirelessly therebetween.

Furthermore, there may be first magnetic core elements arranged such that the first winding 11 and the second winding 21 are arranged around the first magnetic core elements, respectively, so that when the windings 11, 21 are arranged to align, the magnetic core elements also align, thus, forming a magnetic circuit, that is a transformer-like circuit having an air gap between the magnetic core elements.

The first alignment unit 13 and the second alignment unit 23 is configured to transmit a signal, that is based on an excitation signal, therebetween for indicating that the alignment units 13, 23 are either aligned with respect to each other or being arranged into predefined positions with respect to each other such that the first winding 11 and the second winding 21 are substantially aligned with respect to each other. The latter alternative related to the predefined positions may entail that the alignment units 13, 23 are not physically aligned with respect to each other even though the windings 11, 21 would be aligned. The signal may be an electrical signal, such as via a capacitive, inductive, or it may be an electromagnetic signal, such as by light, which may be infrared radiation.

The excitation signal produces a response signal at the first unit 10, that is, at the output of the first alignment unit 13.

Still further, there may be a first electrical converter 12, such as comprising an inverter or a frequency converter, for converting electrical voltage and/or current for injecting to the first winding 11. The other terminals of the first electrical converter 12 may be connected to electrical power source terminals or to another electrical converter device arranged to the elevator shaft 1.

Figure 2 further shows a second electrical converter 22, such as a rectifier, arranged to the second unit 20 of the arrangement 100 and in connection with the second winding 21. The second electrical converter 22 may be configured to convert the alternating current (AC) and/or voltage (AC voltage) induced in the second winding 21 to a direct current (DC) or a DC voltage at the other terminals of the second electrical converter 22.

It is further shown in Fig. 2, a first detection device 14 and a first controller 15.

These may be separate device and the functionalities may be integrated into one device. In some embodiments, the first detection device 14 is arranged to detect if there is a signal being supplied from the second alignment unit 23 to the first alignment unit 13. Especially, the first detection device 14, which may comprise a rectifier or a signal processing device, may be configured to determine an amplitude of the signal fed through the alignment units 13, 23. If the amplitude, or other characteristic of the signal, is of the predefined order, such as higher than a first threshold value, the first detection device 14, or, optionally, the first controller 15 in connection with the first detection device 14 activates the first electrical converter 12, such as by operating the switches thereof, to start supplying electrical power to the first winding 11. The condition that the characteristic of the signal is of the predefined order functions as an indication that the windings 11, 21 are aligned with respect to each other. The first controller 15 may comprise gate drivers of the switches of the first electrical converter 12, etc.

In some embodiments, the other terminals may be in connection with the mover 6 of the movable unit 2, such as through/to an inverter 7 and/or an energy storage 9, for instance.

Thus, in various embodiments, either the first unit 10 or the second unit 20 may be arranged to the movable unit 2 or the elevator shaft 1, and the other of said units 10, 20 to the elevator shaft 1 or the movable unit 2, respectively.

In various embodiments, the second distance 29 may be substantially equal to the first distance 19.

In various embodiments, the alignment units 13, 23 may be arranged to align with respect to each other when the first and the second windings 11, 21 are being aligned with respect to each other.

In various embodiments, at least one of the first base and the second base may be a planar element, optionally, defining recesses for arranging the windings 11, 21 and/or the alignment units 13, 23 thereto.

In some embodiments, the alignment units 13, 23 may be configured to determine a characteristic of an air gap 30 therebetween. Furthermore, the characteristic may be a width of the air gap 30.

In addition, at least one of the first alignment unit 13 and the second alignment unit 23 comprises an air gap sensor, such as for determining a width of the air gap 30.

In some embodiments, there may also be current sensors 25 arranged to the other terminal for measuring the current and, optionally, power supplied through the power windings 11, 21. In Fig. 2, there are shown two alternative points for current measurement. Optionally, there may be, alternatively or in addition, a voltage sensor 26 arranged to measure the voltage at the other terminals. In various embodiments, the current and/or the voltage sensors 25, 26 may be connected to a current and/or voltage controller 24 in connection with the second alignment unit 23. Element 27 represent a connection to a power source for powering the controller 24. The connection may be established to the energy storage 9 of the movable unit 2, such as directly or via a DC/DC converter.

In some embodiments, if the output voltage of the second electrical converter 22 determined by the voltage sensor 26 or the output current of the second electrical converter 22 determined by the current sensor 25 are not of the predefined level, the current and/or the voltage controller 24 may be configured to send a command to the first electrical converter 12, such as via the alignment units 13, 23, and, optionally, the first detection device 14 and/or the first controller 15, to either increase or the decrease, depending on the case, the output voltage/current of the first electrical converter 12 and, thus, the output voltage/current of the second electrical converter 22. If the airgap 30 is too large, the control loop described above won't work properly. The arrangement 100 may be configured to stop the power supply in such a case.

In an embodiment, the determined output voltage or current are configured to be compared to a reference voltage or current, respectively. If the determined voltage is higher than the reference value, the voltage or the current starts to decrease. The decreasing value may be determined. The measured signal may be modulated or processed by utilizing switches in the controller 24 so that it may be supplied from the second alignment unit 23 to the first alignment unit 13. Thus, the higher, such as respect to the amplitude thereof, transmitted to the first alignment unit 13, the higher the power that can be supplied from the first winding 11 to the second winding 21.

In various embodiments, the voltage level on the first 10 and/or the second unit 20 may be less than 120 V, or even less than 60 V, such as 36 V.

Related to the operation of the arrangement 100, the controller 24 may be configured to supply continuously, or intermittently or periodically, a pulse signal, that is an excitation signal, to the second alignment unit 23 so that the second alignment unit 23 transmits the pulse signal, or another signal generated based on said pulse signal, to the first alignment unit 13. The pulse signal can be a sine wave, a triangle wave, a rectangular pulse or whatever wave shape. Also, frequency modulated signal may be used. The signal supplied to the first alignment unit 13 may be configured to be detected by the first detection device 14. The arrangement 100 may be configured such that, if the first detection device 14 detects that the signal is of the predefined order, the first electrical converter 12, such as by the first controller 15, starts to supply power to the first winding 11 and, thus, to the second winding 21. If the signal is determined not be of the predefined order, the operation of the first electrical converter 12 may be configured to be stopped. This simplifies the wireless power transfer logic and control interfaces because the arrangement 100 can automatically decide to supply power or to stop the supplying.

In various embodiments, the power level supplied wirelessly between the first and the second windings 11, 21 may be configured to depend on the distance and/or on the accuracy of the alignment of the alignment units 13, 23 with respect to each other. The closer the alignment units 13, 23 are to each other (detectable, for example, by the first detection device 14), the more power may be supplied between the windings 11, 21. If the alignment is poor and/or the distance is high, the power level supplied may be configured to be lower than the rated power.

Figure 3 illustrates schematically a wireless power transfer arrangement 100 according to an embodiment of the present invention. The wireless power transfer arrangement 100 may comprise at least one first unit 10 comprising a first winding 11, such as comprising at least one coil, a first alignment unit comprising a first alignment winding 13A, and a first base, such as a planar plate or a rigid body part, wherein the first winding 11 and the first alignment unit 13 are arranged to the first base in fixed manner with respect to each other such that there is a first distance 19 between the first winding 11 and the first alignment unit 13. Furthermore, the arrangement 100 may comprise at least one second unit 20 comprising a second winding 21, such as comprising at least one coil, a second alignment unit comprising a second alignment winding 23A, and a second base, wherein the second winding 21 and the second alignment unit 23 are arranged to the second base in fixed manner with respect to each other such that there is a second distance 29 between the second winding 21 and the second alignment unit 23. Furthermore, one of the at least one first unit 10 and the at least one second unit 20 may be adapted for arranging to an elevator shaft 1 of the elevator 1000, and another one of the at least one first unit 10 and the at least one second unit 20 is adapted for arranging to a movable unit 2, such as to an elevator car or a motor unit, of the elevator 1000. Still further, the first alignment unit 13 and the second alignment unit 23 may be configured to be utilized for indicating when the first winding 11 and the second winding 21 are aligned with respect to each other for transferring power wirelessly therebetween.

Furthermore, there may be second magnetic core elements arranged such that the first alignment winding 13A and the second alignment winding 23A are arranged around the second magnetic core elements, respectively, so that when the alignment windings 13A, 23A are arranged to align, the second magnetic core elements also align, thus, forming a magnetic circuit, that is a transformer-like circuit having an air gap between the second magnetic core elements.

The signal between the alignment units 13, 23 in Fig. 3 is therefore transmitted by an inductive coupling between the first alignment winding 13A and the second alignment winding 23A. Thus, preferably, the first alignment winding 13A and the second alignment winding 23A are arranged to align with respect to each other when the first and the second windings 11, 21 are aligned with respect to each other.

Related to the operation of the arrangement 100 of Fig. 3, the controller 24A may be configured to supply continuously, or intermittently or periodically, a pulse signal, that is an excitation signal, such as a voltage or a current signal, to the second alignment winding 23A so that the second alignment winding 23A transmits the pulse signal, or another signal generated based on said pulse signal, to the first alignment winding 13A. The pulse signal can be a sine wave, a triangle wave, a rectangular pulse or whatever wave shape. Also, frequency modulated signal may be used. The signal supplied to the first alignment unit 13 may be configured to be detected by the first detection device 14; the device 14 being in this case, optionally, a rectifier 14A. The arrangement 100 may be configured such that, if the rectifier 14A detects that the amplitude of the rectified signal is of the predefined order, the first electrical converter 12, such as by the first controller 15, starts to supply power to the first winding 11 and, thus, to the second winding 21. If the signal is determined not be of the predefined order, the operation of the first electrical converter 12 may be configured to be stopped. This simplifies the wireless power transfer logic and control interfaces because the arrangement 100 can automatically decide to supply power or to stop the supplying.

In Fig. 3, there are shown two alternative points for current measurement. Optionally, there may be, alternatively or in addition, a voltage sensor 26 arranged to measure the voltage at the other terminals. In various embodiments, the current and/or the voltage sensors 25, 26 may be connected to a current and/or voltage controller 24A in connection with the second alignment unit 23.

In an embodiment, the first distance 19 and/or the second distance 29 may be at least 10 centimeters, at least 15 centimeters, or at least 20 centimeters so that the first winding 11 or the second winding 21 does not interfere the operation of the first alignment winding 13A or the second alignment winding 23A, respectively. In an embodiment, the distances 19, 29 may be at most 50 centimeters, respectively.

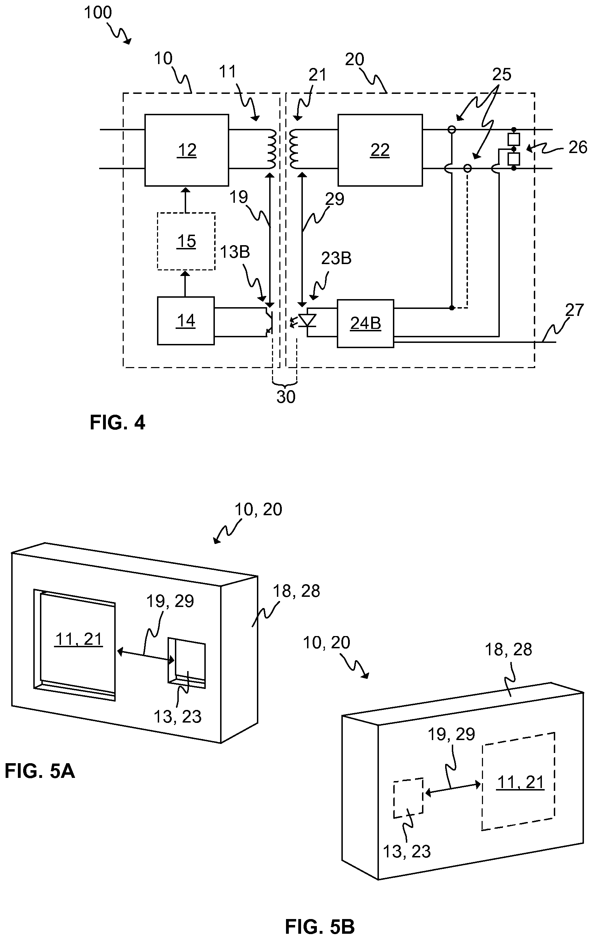

Figure 4 illustrates schematically a wireless power transfer arrangement 100 according to an embodiment of the present invention. The wireless power transfer arrangement 100 may comprise at least one first unit 10 comprising a first winding 11, such as comprising at least one coil, a first alignment unit 13 comprising an infrared receiver 13B, and a first base, such as a planar plate or a rigid body part, wherein the first winding 11 and the first alignment unit 13 are arranged to the first base in fixed manner with respect to each other such that there is a first distance 19 between the first winding 11 and the first alignment unit 13. Furthermore, the arrangement 100 may comprise at least one second unit 20, such as comprising at least one coil, a second alignment unit 23 comprising an infrared transmitting unit 23B, and a second base, wherein the second winding 21 and the second alignment unit 23 are arranged to the second base in fixed manner with respect to each other such that there is a second distance 29 between the second winding 21 and the second alignment unit 23. Furthermore, one of the at least one first unit 10 and the at least one second unit 20 may be adapted for arranging to an elevator shaft 1 of the elevator 1000, and another one of the at least one first unit 10 and the at least one second unit 20 is adapted for arranging to a movable unit 2, such as to an elevator car or a motor unit, of the elevator 1000. Still further, the first alignment unit 13 and the second alignment unit 23 may be configured to be utilized for indicating when the first winding and the second winding 21 are aligned with respect to each other for transferring power wirelessly therebetween.

The signal, that is an excitation signal, between the alignment units 13, 23 in Fig. 4 is therefore transmitted by an electromagnetic coupling utilizing infrared radiation between the infrared receiver 13B and the infrared transmitting unit 23B. Preferably, the infrared receiver 13B and the infrared transmitting unit 23B are arranged to align with respect to each other when the first and the second windings are aligned with respect to each other, however, it may easily be arranged that the infrared receiver 13B and the infrared transmitting unit 23B do not physically align with respect to each other when the first and the second windings 11, 21 are aligned with respect to each other.

Related to the operation of the arrangement 100 of Fig. 4, the controller 24A may be configured to supply continuously, or intermittently or periodically, a pulse or a continuous signal to the infrared transmitting unit 23B so that the infrared transmitting unit 23B transmits the signal, or another signal generated based on said signal, to the infrared receiver 13B. Also, frequency modulated signal may be used. The signal supplied to the infrared receiver 13B may be configured to be detected by the first detection device 14 which may be configured to monitor the output of the infrared receiver 13B. The arrangement 100 may be configured such that, if the first detection device 14 detects that the amplitude of the signal, if even detected, is of the predefined order, the first electrical converter 12, such as by the first controller 15, starts to supply power to the first winding 11 and, thus, to the second winding 21. If the signal is determined not be of the predefined order, the operation of the first electrical converter 12 may be configured to be stopped. This simplifies the wireless power transfer logic and control interfaces because the arrangement 100 can automatically decide to supply power or to stop the supplying.

There are advantages by using an embodiment in accordance with Fig. 4. The airgap 30 may be larger since infrared is easier to transmit between larger distance with respect to the inductive or capacitive coupling. Furthermore, infrared is not as sensitive to the operation of the first and second windings 11, 21, or other magnetic disturbances. The first detection device 14 in this case may comprise a simple analog circuit connected to the infrared receiver which makes it reliable and affordable.

In various embodiments, by having the power windings 11, 21 and the alignment units 13, 23 arranged on the same base or body, such as on a mechanical plate, respectively, solves the position detection challenge with respect to the alignment of the primary and secondary side of the wireless power transfer arrangement. The units 10, 20 of the arrangement may have mirrored orientation, so when the movable unit 2 comprising the first 10 or the second unit 20 reaches a wireless power transfer position, the power windings 11, 21 are facing each other and the alignment units 13, 23 are either facing each other or at the predefined position indicating the alignment of the power windings 11, 21. The alignment units 13, 23 may also be arranged to detect if the airgap 30 therebetween changes. If airgap 30 is too big, the charging, that is the wireless power transfer, may be arranged to stop automatically.

Figures 5A and 5B illustrate schematically a unit 10, 20 for wireless power transfer according to an embodiment of the present invention. As can be seen, according to some embodiments, at least one or both of the first base 18 and the second base 28 may be planar elements, optionally, defining recesses for arranging the windings 11, 21 and/or the alignment units 13, 23 thereto. Advantageously, the other one of the first and the second units 10, 20 is a mirror image of the other with respect to the location of the windings 11, 21 and/or the alignment units 13, 23. However, otherwise they may differ, as can be seen in Figs. 2-4, for instance.

Furthermore, the first and/or the second bases 18, 19 may be covered in electrically insulating material or at least the windings may be electrically insulating so that it is safer to touch the unit 10, 20.

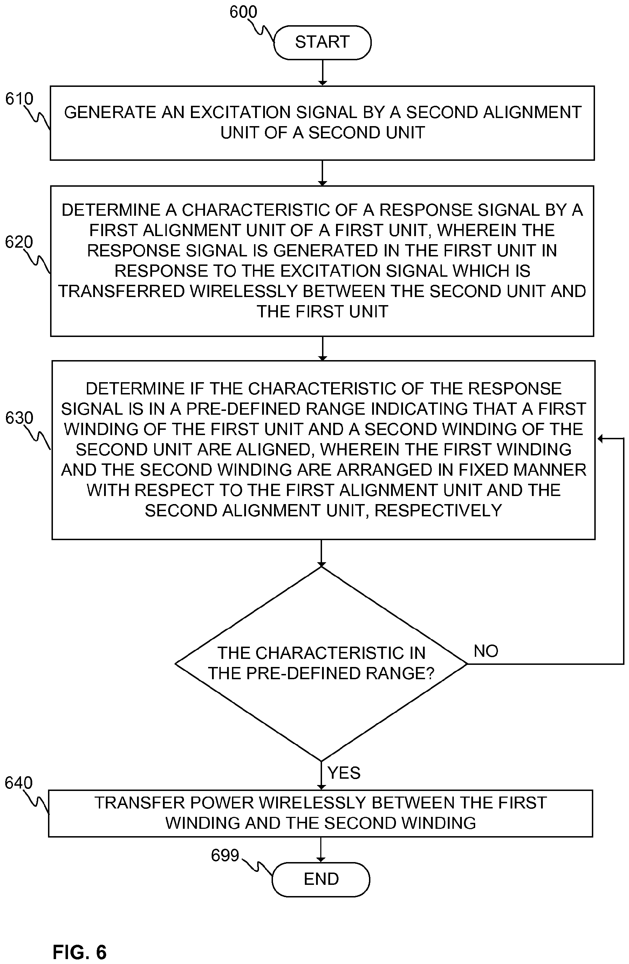

Figure 6 shows a flow diagram of a method in accordance with an embodiment of the present invention.

Step 600 refers to a start-up phase of the method. Suitable equipment and components are obtained, and systems assembled and configured for operation.

Step 610 refers to generating an excitation signal by a second alignment unit 23 of a second unit 20. The excitation signal may be, in fact, formed by the current/voltage controller 24; 24A, for instance, and then supplied to the second alignment unit 23 for actual generation therein.

Step 620 refers to determining a characteristic, such as an amplitude, of a response signal by a first alignment unit 13 of a first unit 10, wherein the response signal is generated in the first unit 10 in response to the excitation signal which is transferred wirelessly between the second unit 20 and the first unit 10, more specifically between the second alignment unit 23 and the first alignment unit 13.

Step 630 refers to determining if the characteristic of the response signal is in a pre-defined range or order indicating that a first winding 11 of the first unit 10 and a second winding 21 of the second unit 20 are aligned, wherein the first winding 11 and the second winding 21 are arranged in fixed manner with respect to the first alignment unit 13 and the second alignment unit 23, respectively, and, if the characteristic is in the pre-defined range, such as higher than a threshold value.

Step 640 refers to transferring power wirelessly between the first winding 11 and the second winding 21.

As described hereinbefore, the excitation signal may be transferred via an inductive coupling between the first and the second alignment units 13, 23.

Alternatively, the excitation signal may be transferred via an electromagnetic coupling, such as by utilizing infrared radiation, between the first and the second alignment units 13, 23.

In some embodiments, the method may comprise aligning the alignment units 13, 23 with respect to each other when the first and the second windings 11, 21 are being aligned with respect to each other.

In various embodiments, the method may comprise determining a characteristic of an air gap 30, such as the width, between the first alignment unit 13 and the second alignment unit 23.

Method execution is ended at step 699. The method may be performed once, intermittently, periodically, continuously or, on demand.

## Claims

1. A wireless power transfer arrangement (100) for an elevator (1000), **characterized in that** the arrangement (100) comprises:
at least one first unit (10) comprising a first winding (11), a first alignment unit (13; 13A; 13B) and a first base (18), wherein the first winding (11) and the first alignment unit (13; 13A; 13B) are arranged to the first base (18) in fixed manner with respect to each other such that there is a first distance (19) between the first winding (11) and the first alignment unit (13; 13A; 13B); and
at least one second unit (20) comprising a second winding (21), a second alignment unit (23; 23A; 23B), and a second base (28), wherein the second winding (21) and the second alignment unit (23; 23A; 23B) are arranged to the second base (28) in fixed manner with respect to each other such that there is a second distance (29) between the second winding (21) and the second alignment unit (23; 23A; 23B);
wherein the second alignment unit (23; 23A; 23B) is configured to generate an excitation signal and the first alignment unit (13; 13A; 13B) is configured to generate a response signal in response to the excitation signal;
wherein one of the at least one first unit (10) and the at least one second unit (20) is adapted for arranging to an elevator shaft (1) of the elevator (1000), and another one of the at least one first unit (10) and the at least one second unit (20) is adapted for arranging to a movable unit (2), such as to an elevator car, of the elevator (1000); and
wherein the first alignment unit (13; 13A; 13B) and the second alignment unit (23; 23A; 23B) are configured to be utilized for indicating when the first winding (11) and the second winding (21) are aligned with respect to each other for transferring power wirelessly therebetween.

2. The wireless power transfer arrangement (100) of claim 1, wherein the alignment units (13, 23) are arranged to align with respect to each other when the first and the second windings (11, 21) are being aligned with respect to each other.

3. The wireless power transfer arrangement (100) of claim 1 or 2, wherein the second distance (29) is substantially equal to the first distance (19).

4. The wireless power transfer arrangement (100) of any one of the preceding claims, wherein at least one of the first base (18) and the second base (28) is a planar element.

5. The wireless power transfer arrangement (100) of any one of the preceding claims, wherein
the first alignment unit (13) comprises a first alignment winding (13A); and
the second alignment unit (23) comprises a second alignment winding (23A).

6. The wireless power transfer arrangement (100) of any one of the preceding claims, wherein
the first alignment unit (10) comprises an infrared receiver (13B); and
the second alignment unit (20) comprises an infrared transmitting unit (23B).

7. The wireless power transfer arrangement (100) of any one of the preceding claims, wherein the alignment units (13, 23) are configured to determine a characteristic of an air gap (30) therebetween.

8. The wireless power transfer arrangement (100) of claim 7, wherein the characteristic is a width of the air gap (30).

9. The wireless power transfer arrangement (100) of claim 7 or 8, wherein at least one of the first alignment unit (13) and the second alignment unit (23) comprises an air gap sensor, such as for determining a width of the air gap (30).

10. An elevator (1000), **characterized in that** the elevator (1000) comprises:
the wireless power transfer arrangement (100) of any one of the preceding claims;
the elevator shaft (1);
the movable unit (2), such as at least one elevator car or a motor unit;
an electric linear motor comprising at least one linear stator (4) extending in the elevator shaft (1) and at least one mover (6) coupled to the movable unit (2) and adapted to be moved along the linear stator (4);
wherein the at least one second unit (20) of the wireless power transfer arrangement (100) is coupled to the movable unit (2), and the at least one first unit (10) of the wireless power transfer arrangement (100) is coupled the elevator shaft (1) for transferring power wirelessly between the movable unit (2) and the elevator shaft (1).

11. A method for transferring power wirelessly in an elevator (1000), **characterized in that** the method comprises:
- generating (610) an excitation signal by a second alignment unit (23; 23A; 23B) of a second unit (20);
- determining (620) a characteristic of a response signal by a first alignment unit (13; 13A; 13B) of a first unit (10), wherein the response signal is generated in the first unit (10) in response to the excitation signal which is transferred wirelessly between the second unit (20) and the first unit (10);
- determining (630) if the characteristic of the response signal is in a pre-defined range indicating that a first winding (11) of the first unit (10) and a second winding (21) of the second unit (20) are aligned, wherein the first winding (11) and the second winding (21) are arranged in fixed manner with respect to the first alignment unit (13) and the second alignment unit (23), respectively, and, if the characteristic is in the pre-defined range,
- transferring (640) power wirelessly between the first winding (1) and the second winding (21).

12. The method of claim 11, wherein the excitation signal is transferred via an inductive coupling between the first and the second alignment units (13, 23; 13A, 23A).

13. The method of claim 11, wherein the excitation signal is transferred via an electromagnetic coupling, such as by utilizing infrared radiation, between the first and the second alignment units (13, 23; 13B, 23B).

14. The method of any one of claims 11-13, comprising aligning the alignment units (13; 13A; 13B; 23; 23A; 23B) with respect to each other when the first and the second windings (11, 21) are being aligned with respect to each other.

15. The method of any one of claims 11-14, comprising determining a characteristic of an air gap (30) between the first alignment unit (13; 13A; 13B) and the second alignment unit (23; 23A; 23B).

## Patentansprüche

1. Anordnung (100) zur drahtlosen Leistungsübertragung für einen Aufzug (1000), **dadurch gekennzeichnet, dass** die Anordnung (100) Folgendes umfasst:
mindestens eine erste Einheit (10), die eine erste Wicklung (11), eine erste Ausrichtungseinheit (13; 13A; 13B) und eine erste Basis (18) umfasst, wobei die erste Wicklung (11) und die erste Ausrichtungseinheit (13; 13A; 13B) zu der ersten Basis (18) mit Bezug aufeinander fest angeordnet sind, sodass zwischen der ersten Wicklung (11) und der ersten Ausrichtungseinheit (13; 13A; 13B) ein erster Abstand (19) ist; und
mindestens eine zweite Einheit (20), die eine zweite Wicklung (21), eine zweite Ausrichtungseinheit (23; 23A; 23B) und eine zweite Basis (28) umfasst, wobei die zweite Wicklung (21) und die zweite Ausrichtungseinheit (23; 23A; 23B) zu der zweiten Basis (28) mit Bezug aufeinander fest angeordnet sind, sodass zwischen der zweiten Wicklung (21) und der zweiten Ausrichtungseinheit (23; 23A; 23B) ein zweiter Abstand (29) ist;
wobei die zweite Ausrichtungseinheit (23; 23A; 23B) konfiguriert ist, um ein Anregungssignal zu erzeugen, und die erste Ausrichtungseinheit (13; 13A; 13B) konfiguriert ist, um als Antwort auf das Anregungssignal ein Antwortsignal zu erzeugen;
wobei eine von der mindestens einen ersten Einheit (10) und der mindestens einen zweiten Einheit (20) zum Anordnen an einem Aufzugsschacht (1) des Aufzugs (1000) angepasst ist und eine andere der mindestens einen ersten Einheit (10) und der mindestens einen zweiten Einheit (20) zum Anordnen an einer beweglichen Einheit (2) des Aufzugs (1000), etwa an einer Aufzugskabine, angepasst ist; und
wobei die erste Ausrichtungseinheit (13; 13A; 13B) und die zweite Ausrichtungseinheit (23; 23A; 23B) konfiguriert sind, um dazu genutzt zu werden, anzuzeigen, wenn die erste Wicklung (11) und die zweite Wicklung (21) mit Bezug aufeinander ausgerichtet sind, um Leistung drahtlos aneinander zu übertragen.

2. Anordnung (100) zur drahtlosen Leistungsübertragung nach Anspruch 1, wobei die Ausrichtungseinheiten (13, 23) angeordnet sind, um sich mit Bezug aufeinander auszurichten, während die erste und die zweite Wicklung (11, 21) mit Bezug aufeinander ausgerichtet werden.

3. Anordnung (100) zur drahtlosen Leistungsübertragung nach Anspruch 1 oder 2, wobei der zweite Abstand (29) im Wesentlichen gleich dem ersten Abstand (19) ist.

4. Anordnung (100) zur drahtlosen Leistungsübertragung nach einem der vorhergehenden Ansprüche, wobei es sich bei der ersten Basis (18) und/oder der zweiten Basis (28) um ein planares Element handelt.

5. Anordnung (100) zur drahtlosen Leistungsübertragung nach einem der vorhergehenden Ansprüche, wobei
die erste Ausrichtungseinheit (13) eine erste Ausrichtungswicklung (13A) umfasst; und
die zweite Ausrichtungseinheit (23) eine zweite Ausrichtungswicklung (23A) umfasst.

6. Anordnung (100) zur drahtlosen Leistungsübertragung nach einem der vorhergehenden Ansprüche, wobei
die erste Ausrichtungseinheit (10) einen Infrarotempfänger (13B) umfasst; und
die zweite Ausrichtungseinheit (20) eine Infrarotsendeeinheit (23B) umfasst.

7. Anordnung (100) zur drahtlosen Leistungsübertragung nach einem der vorhergehenden Ansprüche, wobei die Ausrichtungseinheiten (13, 23) konfiguriert sind, um eine Eigenschaft eines Luftspalts (30) zwischen ihnen zu bestimmen.

8. Anordnung (100) zur drahtlosen Leistungsübertragung nach Anspruch 7, wobei die Eigenschaft eine Breite des Luftspalts (30) ist.

9. Anordnung (100) zur drahtlosen Leistungsübertragung nach Anspruch 7 oder 8, wobei mindestens eine von der ersten Ausrichtungseinheit (13) und der zweiten Ausrichtungseinheit (23) einen Luftspaltsensor, etwa zum Bestimmen einer Breite des Luftspalts (30), umfasst.

10. Aufzug (1000), **dadurch gekennzeichnet, dass** der Aufzug (1000) Folgendes umfasst:
die Anordnung (100) zur drahtlosen Leistungsübertragung nach einem der vorhergehenden Ansprüche;
den Aufzugsschacht (1);
die bewegliche Einheit (2), etwa mindestens eine Aufzugskabine oder eine Motoreinheit;
einen Elektrolinearmotor, der mindestens einen Linearstator (4), der sich in dem Aufzugsschacht (1) erstreckt, und mindestens einen Beweger (6), der mit der beweglichen Einheit (2) gekoppelt und angepasst ist, um entlang des Linearstators (4) bewegt zu werden, umfasst;
wobei die mindestens eine zweite Einheit (20) der Anordnung (100) zur drahtlosen Leistungsübertragung mit der beweglichen Einheit (2) gekoppelt ist und die mindestens eine erste Einheit (10) der Anordnung (100) zur drahtlosen Leistungsübertragung mit dem Aufzugsschacht (1) gekoppelt ist, um Leistung drahtlos zwischen der beweglichen Einheit (2) und dem Aufzugsschacht (1) zu übertragen.

11. Verfahren zum drahtlosen Übertragen von Leistung in einem Aufzug (1000), **dadurch gekennzeichnet, dass** das Verfahren Folgendes umfasst:
- Erzeugen (610) eines Anregungssignals durch eine zweite Ausrichtungseinheit (23; 23A; 23B) einer zweiten Einheit (20);
- Bestimmen (620) einer Eigenschaft eines Antwortsignals durch eine erste Ausrichtungseinheit (13; 13A; 13B) einer ersten Einheit (10), wobei das Antwortsignal in der ersten Einheit (10) als Antwort auf das Anregungssignal, das drahtlos zwischen der zweiten Einheit (20) und der ersten Einheit (10) übertragen wird, erzeugt wird;
- Bestimmen (630), ob die Eigenschaft des Antwortsignals in einem vordefinierten Bereich liegt, wodurch angezeigt wird, dass eine erste Wicklung (11) der ersten Einheit (10) und eine zweite Wicklung (21) der zweiten Einheit (20) ausgerichtet sind, wobei die erste Wicklung (11) und die zweite Wicklung (21) mit Bezug auf die erste Ausrichtungseinheit (13) bzw. die zweite Ausrichtungseinheit (23) fest angeordnet sind, und, wenn die Eigenschaft in dem vordefinierten Bereich liegt,
- drahtloses Übertragen (640) von Leistung zwischen der ersten Wicklung (1) und der zweiten Wicklung (21).

12. Verfahren nach Anspruch 11, wobei das Anregungssignal über eine induktive Kopplung zwischen der ersten und der zweiten Ausrichtungseinheit (13, 23; 13A, 23A) übertragen wird.

13. Verfahren nach Anspruch 11, wobei das Anregungssignal über eine elektromagnetische Kopplung, etwa unter Nutzung von Infrarotstrahlung, zwischen der ersten und der zweiten Ausrichtungseinheit (13, 23; 13B, 23B) übertragen wird.

14. Verfahren nach einem der Ansprüche 11-13, das umfasst, dass die Ausrichtungseinheiten (13; 13A; 13B; 23; 23A; 23B) mit Bezug aufeinander ausgerichtet werden, während die erste und die zweite Wicklung (11, 21) mit Bezug aufeinander ausgerichtet werden.

15. Verfahren nach einem der Ansprüche 11-14, das umfasst, dass eine Eigenschaft eines Luftspalts (30) zwischen der ersten Ausrichtungseinheit (13; 13A; 13B) und der zweiten Ausrichtungseinheit (23; 23A; 23B) bestimmt wird.

## Revendications

1. Agencement de transfert d'énergie sans fil (100) pour un ascenseur (1000), l'agencement (100) étant **caractérisé en ce qu'**il comprend :
au moins une première unité (10) comprenant un premier enroulement (11), une première unité d'alignement (13 ; 13A ; 13B) et une première base (18), le premier enroulement (11) et la première unité d'alignement (13 ; 13A ; 13B) étant agencés sur la première base (18) de manière fixe l'un par rapport à l'autre, de telle sorte qu'il existe une première distance (19) entre le premier enroulement (11) et la première unité d'alignement (13 ; 13A ; 13B) ; et
au moins une seconde unité (20) comprenant un second enroulement (21), une seconde unité d'alignement (23 ; 23A ; 23B) , et une seconde base (28), le second enroulement (21) et la seconde unité d'alignement (23 ; 23A ; 23B) étant agencés sur la seconde base (28) de manière fixe l'un par rapport à l'autre, de telle sorte qu'il existe une seconde distance (29) entre le second enroulement (21) et la seconde unité d'alignement (23 ; 23A ; 23B) ;
la seconde unité d'alignement (23 ; 23A ; 23B) étant configurée pour générer un signal d'excitation et la première unité d'alignement (13 ; 13A ; 13B) étant configurée pour générer un signal de réponse en réponse au signal d'excitation ;
une unité parmi l'au moins une première unité (10) et l'au moins une seconde unité (20) étant conçue pour être agencée sur une gaine d'ascenseur (1) de l'ascenseur (1000), et une autre unité parmi l'au moins une première unité (10) et l'au moins une seconde unité (20) étant conçue pour être agencée sur une unité mobile (2), telle qu'une cabine d'ascenseur, de l'ascenseur (1000) ; et
la première unité d'alignement (13 ; 13A ; 13B) et la seconde unité d'alignement (23 ; 23A ; 23B) étant configurées pour être utilisées afin d'indiquer quand le premier enroulement (11) et le second enroulement (21) sont alignés l'un par rapport à l'autre pour transférer de l'énergie sans fil entre eux.

2. Agencement de transfert d'énergie sans fil (100) selon la revendication 1, dans lequel les unités d'alignement (13, 23) sont agencées pour s'aligner l'une par rapport à l'autre lorsque les premier et second enroulements (11, 21) sont alignés l'un par rapport à l'autre.

3. Agencement de transfert d'énergie sans fil (100) selon la revendication 1 ou 2, dans lequel la seconde distance (29) est sensiblement égale à la première distance (19).

4. Agencement de transfert d'énergie sans fil (100) selon l'une quelconque des revendications précédentes, dans lequel la première base (18) et/ou la seconde base (28) sont un élément plan.

5. Agencement de transfert d'énergie sans fil (100) selon l'une quelconque des revendications précédentes, dans lequel :
la première unité d'alignement (13) comprend un premier enroulement d'alignement (13A) ; et
la seconde unité d'alignement (23) comprend un second enroulement d'alignement (23A).

6. Agencement de transfert d'énergie sans fil (100) selon l'une quelconque des revendications précédentes, dans lequel :
la première unité d'alignement (10) comprend un récepteur infrarouge (13B) ; et
la seconde unité d'alignement (20) comprend une unité d'émission infrarouge (23B).

7. Agencement de transfert d'énergie sans fil (100) selon l'une quelconque des revendications précédentes, dans lequel les unités d'alignement (13, 23) sont configurées pour déterminer une caractéristique d'un entrefer (30) entre elles.

8. Agencement de transfert d'énergie sans fil (100) selon la revendication 7, dans lequel la caractéristique est une largeur de l'entrefer (30).

9. Agencement de transfert d'énergie sans fil (100) selon la revendication 7 ou 8, dans lequel la première unité d'alignement (13) et/ou la seconde unité d'alignement (23) comprennent un capteur d'entrefer, par exemple pour déterminer une largeur de l'entrefer (30).

10. Ascenseur (1000), l'ascenseur (1000) étant **caractérisé en ce qu'**il comprend :
l'agencement de transfert d'énergie sans fil (100) selon l'une quelconque des revendications précédentes ;
la gaine d'ascenseur (1) ;
l'unité mobile (2), telle qu'au moins une cabine d'ascenseur ou une unité motrice ;
un moteur électrique linéaire comprenant au moins un stator linéaire (4) s'étendant dans la gaine d'ascenseur (1) et au moins un moteur (6) accouplé à l'unité mobile (2) et conçu pour être déplacé le long du stator linéaire (4) ;
l'au moins une seconde unité (20) de l'agencement de transfert d'énergie sans fil (100) étant accouplée à l'unité mobile (2), et l'au moins une première unité (10) de l'agencement de transfert d'énergie sans fil (100) est accouplée à la gaine d'ascenseur (1) pour transférer de l'énergie sans fil entre l'unité mobile (2) et la gaine d'ascenseur (1).

11. Procédé de transfert d'énergie sans fil dans un ascenseur (1000), le procédé étant **caractérisé en ce qu'**il comprend les étapes consistant à :
- générer (610) un signal d'excitation par une seconde unité d'alignement (23 ; 23A ; 23B) d'une seconde unité (20) ;
- déterminer (620) une caractéristique d'un signal de réponse par une première unité d'alignement (13 ; 13A ; 13B) d'une première unité (10), le signal de réponse étant généré dans la première unité (10) en réponse au signal d'excitation qui est transféré sans fil entre la seconde unité (20) et la première unité (10) ;
- déterminer (630) si la caractéristique du signal de réponse se situe dans une plage prédéfinie indiquant qu'un premier enroulement (11) de la première unité (10) et qu'un second enroulement (21) de la seconde unité (20) sont alignés, le premier enroulement (11) et le second enroulement (21) étant agencés respectivement de manière fixe par rapport à la première unité d'alignement (13) et à la seconde unité d'alignement (23), et, si la caractéristique se situe dans la plage prédéfinie,
- alors transférer (640) de l'énergie sans fil entre le premier enroulement (1) et le second enroulement (21) .

12. Procédé selon la revendication 11, dans lequel le signal d'excitation est transféré par l'intermédiaire d'un accouplement inductif entre les première et seconde unités d'alignement (13, 23 ; 13A, 23A).

13. Procédé selon la revendication 11, dans lequel le signal d'excitation est transféré par l'intermédiaire d'un accouplement électromagnétique, par exemple au moyen d'un rayonnement infrarouge, entre les première et seconde unités d'alignement (13, 23 ; 13B, 23B).

14. Procédé selon l'une quelconque des revendications 11 à 13, comprenant l'étape consistant à aligner les unités d'alignement (13 ; 13A ; 13B ; 23 ; 23A ; 23B) l'une par rapport à l'autre lorsque les premier et second enroulements (11, 21) sont alignés l'un par rapport à l'autre.

15. Procédé selon l'une quelconque des revendications 11 à 14, comprenant l'étape consistant à déterminer une caractéristique d'un entrefer (30) entre la première unité d'alignement (13 ; 13A ; 13B) et la seconde unité d'alignement (23 ; 23A ; 23B).
